(19) Europäisches Patentamt
European Patent Office
Office européen des brevets

(11) **EP 2 865 089 B1**

(12) **EUROPÄISCHE PATENTSCHRIFT**

(45) Veröffentlichungstag und Bekanntmachung des Hinweises auf die Patenterteilung:
**13.12.2017 Patentblatt 2017/50**

(51) Int Cl.:
***H02P 1/16*** *(2006.01)*      ***H02P 1/26*** *(2006.01)*

(21) Anmeldenummer: **13750282.9**

(22) Anmeldetag: **06.08.2013**

(86) Internationale Anmeldenummer:
**PCT/EP2013/066462**

(87) Internationale Veröffentlichungsnummer:
**WO 2014/029614 (27.02.2014 Gazette 2014/09)**

(54) **MOTORSTARTER**

MOTOR STARTER

DÉMARREUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2012 DE 102012214814**

(43) Veröffentlichungstag der Anmeldung:
**29.04.2015 Patentblatt 2015/18**

(73) Patentinhaber: **Siemens Aktiengesellschaft 80333 München (DE)**

(72) Erfinder:
• **SEITZ, Johann 92224 Amberg (DE)**
• **HERTZ, Dirk 92260 Fichtenhof (DE)**
• **JONAS, Stephan 92431 Neunburg (DE)**

(56) Entgegenhaltungen:
**EP-A1- 0 806 781**      **DE-A1- 1 415 980**
**DE-A1-102005 036 777**

EP 2 865 089 B1

**Beschreibung**

Die Erfindung betrifft einen Motorstarter sowie ein Verfahren des Motorstarters. Der erfindungsgemäße Motorstarter wird insbesondere innerhalb der industriellen Automatisierungstechnik eingesetzt.

Mittels des Motorstarters kann ein dem Motorstarter nachgeschalteter Elektromotor gesteuert werden. Hierfür wird eine Energieversorgung des dem Motorstarter nachgeschalteten Elektromotors über den Motorstarter geführt, so dass der Elektromotor mit einem Versorgungsnetz verbunden ist. Das Versorgungsnetz ist insbesondere ein Niederspannungsnetz einer industriellen Anlage (z.B. drei Phasen, 400 Volt, 50 Hertz).

Aus EP 0 806 781 A1 ist eine Schaltung bekannt, die an einer Leitung einer dreiphasigen Stromleitung vor einem Elektromotor angeschlossen ist. Die Schaltung umfasst einen Schutzschalter, einen Bypass-Schalter und ein Thyristorpaar. Der Bypass-Schalter und das Thyristorpaar sind parallelgeschaltet. Dem Thyristorpaar und dem Bypass-Schalter ist der Schutzschalter in Serie vorgeschaltet. Die Schaltung nach EP 0 806 781 A1 dient dazu, den Elektromotor auf sichere Weise mit Strom zu versorgen.

Die Druckschrift DE 14 15 980 A1 offenbart ein Verfahren zum Schalten von Wechselstromkreisen, bei dem die Betätigung mechanischer und elektronischer Schalter kombiniert wird. Die mechanischen Schalter sind dabei parallel zu den elektronischen Schaltern angebracht oder als Trennschalter in Reihe zu den elektronischen Schaltern angeordnet. Die Betätigung der Schalter erfolgt zeitlich koordiniert und ist darauf ausgelegt, die Entstehung von Lichtbögen zu vermeiden. Die zeitliche Koordination wird durch automatisch wirkende zeitabhängige Steuereinrichtungen gewährleistet.

Zum Steuern der Energieversorgung des nachgeschalteten Elektromotors umfasst der Motorstarter eine Steuereinheit und eine erste Strombahn. Über die erste Strombahn wird eine erste Phase des Versorgungsnetzes zum nachgeschalteten Elektromotor geführt. Die erste Strombahn umfasst einen Halbleiterschalter und ein elektromechanisches Schaltelement, wobei der Halbleiterschalter und das Schaltelement in Serie geschaltet sind und mittels der Steuereinheit gesteuert werden können.

Beim Schalten von Drehstromasynchronmotoren mit Halbleiterschaltern befindet sich nach einem Abschalten des Elektromotors mittels eines Halbleiterschalters der Halbleiterschalter zwischen zwei Spannungsquellen, so dass am Halbleiterschalter eine Sperrspannung anliegt. Die Sperrspannung des Halbleiterschalters ist jene elektrische Spannung, welche über den Halbleiterschalter anliegt. Die eine Spannungsquelle ist das Versorgungsnetz. Die andere Spannungsquelle ist die durch den Elektromotor induzierte Spannung, die so lange ansteht, wie im Elektromotor noch ein Magnetfeld besteht.

Da die Drehzahl des Elektromotors schon beim Abschalten durch den Motorstarter kleiner als seine Synchrondrehzahl ist und die Drehzahl nach dem Abschalten des Elektromotors abklingt, hat die durch den Elektromotor erzeugte Spannung immer eine Frequenz, die kleiner ist als die Frequenz der Spannung des Versorgungsnetzes. Somit ergeben sich für den Motorstarter Zeitpunkte, in denen die Spannungsdifferenz und somit die Spannungsbeanspruchung des Halbleiterschalters bis zur Summe der beiden Scheitelspannungen anwachsen kann. Die zulässige maximale Sperrspannung des eingesetzten Halbleiterschalters muss daher entsprechend hoch ausgelegt werden. Bisher wurde dies dadurch gelöst, dass der Halbleiterschalter eines Motorstarters eine zulässige maximale Sperrspannung haben muss, die höher ist, als die maximal auftretende Spannung am Halbleiterschalter bezüglich eines für den Motorstarter zulässigen Systems. Die erforderliche zulässige maximale Sperrspannung für den Halbleiterschalter eines Motorstarters wird üblicherweise folgendermaßen berechnet:

$$U_{Sperr} \geq U_{Netz} \cdot \sqrt{2} \cdot 2 \cdot T$$

$U_{Sperr}$ = Maximale Sperrspannung des Halbleiterschalters
$U_{Netz}$ = Nominale Spannung des Versorgungsnetzes
T = Toleranzfaktor

Bei 500 Volt nominale Versorgungsnetzspannung mit 10 % Toleranz (T = 1,1) liegt eine Sperrspannung von 1556 Volt vor. Innerhalb eines Motorstarters würde daher üblicherweise ein Halbleiterschalter mit einer zulässigen maximalen Sperrspannung von 1600 Volt eingesetzt werden.

Es ist Aufgabe der vorliegenden Erfindung einen kostengünstigen sicheren Motorstarter bereitzustellen.

Diese Aufgabe wird gelöst durch einen Motorstarter gemäß Anspruch 1, d.h. einen Motorstarter mit einer Steuereinheit und einer ersten Strombahn, über welche eine Energiezufuhr für einen nachgeschalteten Elektromotor erfolgen kann, wobei die erste Strombahn einen Halbleiterschalter und ein elektromechanisches Schaltelement umfasst, wobei der Halbleiterschalter und das Schaltelement in Serie geschaltet sind, wobei die Steuereinheit derart ausgebildet ist, dass sie zum Herstellen einer Energiezufuhr über die erste Strombahn in einem ersten Schritt sicherstellt, dass die gegenwärtig über das Schaltelement anliegende Spannung bezüglich eines vorangegangenen Öffnens des Schaltelements unterhalb der zulässigen maximalen Sperrspannung des Halbleiterschalters liegt, und anschließend in einem zweiten Schritt zunächst das Schaltelement schließt und daraufhin den Halbleiterschalter leitend schaltet, sowie durch ein Verfahren gemäß Anspruch 9 d.h. durch ein Verfahren zum Herstellen einer Energiezufuhr über eine erste Strombahn eines Motorstarters für einen nachgeschalteten Elektromotor, wobei die erste Strombahn einen Halbleiterschalter und ein elektromechanisches Schaltelement umfasst, wobei der Halbleiterschalter und das Schaltelement in Serie geschaltet sind, wobei zum Herstellen der Energiezufuhr über die erste Strombahn die Steuereinheit in einem ersten Schritt sicherstellt, dass die gegenwärtig über das Schaltelement anliegende Spannung bezüglich eines vorangegangenen Öffnens des Schaltelements, unterhalb der zulässigen maximalen Sperrspannung des Halbleiterschalters liegt, und anschließend in einem zweiten Schritt zunächst das Schaltelement schließt und daraufhin den Halbleiterschalter leitend schaltet.

Vorteilhafte Weiterbildungen der Erfindung sind in den abhängigen Ansprüchen 2 bis 8 angegeben.

Die erste Strombahn des Motorstarters verbindet geräteintern die eingangsseitige Anschlussstelle des Motorstarters mit einer ausgangsseitigen Anschlussstelle des Motorstarters. Der Motorstarter wird über seine eingangsseitige Anschlussstelle mit dem Versorgungsnetz (z.B. Drehstromnetz) verbunden und mit seiner ausgangsseitigen Anschlussstelle mit dem Elektromotor verbunden. Die Energieversorgung des Elektromotors wird somit über die erste Strombahn geführt. Der Elektromotor ist insbesondere ein Asynchronmotor.

Beim Herstellen einer über die erste Strombahn erfolgenden Energiezufuhr werden die eingangsseitigen Anschlussstelle n mit den ausgangsseitigen Anschlussstellen der ersten Strombahn elektrisch leitend verbunden, so dass über die erste Strombahn die Energiezufuhr für den nachgeschalteten Elektromotor erfolgt.

Die Steuereinheit kann den Halbleiterschalter und das Schaltelement steuern. Hierbei kann sie den Halbleiterschalter in einen elektrisch leitenden Zustand und einen elektrisch nicht leitenden Zustand (gesperrten Zustand) schalten sowie das Schaltelement öffnen (elektrisch nicht leitender Zustand) und schließen (elektrisch leitender Zustand). Mittels des Halbleiterschalters und des Schaltelements kann eine über die erste Strombahn erfolgende Energiezufuhr für einen dem Motorstarter nachgeschalteten Elektromotor gesteuert werden.

Die Sperrspannung des Halbleiterschalters ist jene elektrische Spannung, welche über den Halbleiterschalter bezüglich der Strombahn anliegt. Die maximal zulässige Sperrspannung des Halbleiterschalters liegt vorzugsweise oberhalb des Scheitelwerts der für den Motorstarter zulässigen nominalen Spannung des Versorgungsnetzes ($U_{Netz}$) und vorzugsweise unterhalb des Wertes aus $U_{Netz} \cdot \sqrt{2} \cdot 2$. Die maximale Sperrspannung des Halbleiterschalters liegt insbesondere bei ca. $U_{Netz} \cdot \sqrt{2} \cdot 1,1$.

Bei einem Abschaltvorgang eines dem Motorstarter nachgeschalteten Elektromotors wird die über die erste Strombahn erfolgende Energiezufuhr des nachgeschalteten laufenden Elektromotors unterbrochen.

Hierbei wird insbesondere der Halbleiterschalter in den nichtleitenden Zustand geschaltet und unmittelbar darauffolgend das Schaltelement geöffnet. Während der Auslaufphase des Elektromotors kann eine Spannung über die erste Strombahn anliegen, welche den Halbleiterschalter zerstören kann. Nach einem Abschaltvorgang des Elektromotors könnte durch ein sofortiges Wiedereinschalten des Elektromotors und ein hierfür erforderliches Schließen des Schaltelements eine unzulässige Sperrspannung am Halbleiterschaltelement anliegen.

Die Steuereinheit ist daher derart ausgebildet, dass sie zum Herstellen einer Energiezufuhr über die Strombahn in einem ersten Schritt sicherstellt, dass die gegenwärtig über das Schaltelement anliegende Spannung bezüglich eines vorangegangenen Öffnens des Schaltelements (insbesondere wegen eines Abschaltvorgangs) beständig unterhalb der zulässigen maximalen Sperrspannung des Halbleiterschalters liegt. Erst wenn dieser Zustand vorliegt, so wird durch die Steuereinheit in einem anschließenden zweiten Schritt zunächst das Schaltelement geschlossen und anschließend der Halbleiterschalter leitend geschaltet. Hierdurch kann sichergestellt werden, dass der Halbleiterschalter nicht zerstört wird. Ferner wird durch das gestufte Ansteuern im zweiten Schritt sichergestellt, dass ein sanftes Einschalten mittels des Halbleiterschalters erfolgt, ohne dass es zu einer unzulässigen Belastung am Schaltelement kommt.

Die Steuereinheit kann somit nach einem Abschalten des Elektromotors das Wiedereinschalten eines laufenden Elektromotors verzögern, bis gemäß des ersten Schrittes sichergestellt ist, dass die gegenwärtig über das geöffnete Schaltelement anliegende Spannung beständig unterhalb der zulässigen maximalen Sperrspannung des Halbleiterschalters liegt.

Das Sicherstellen kann beispielsweise durch einen Abgleich mit einem in der Steuereinheit hinterlegten Referenzwert erfolgen. Der hinterlegte Referenzwert kann beispielsweise die zulässige maximale Sperrspannung des Halbleiterschalters sein. Mittels einer Messvorrichtung kann die über dem geöffneten Schaltelement anliegende Sperrspannung (die theoretisch am Halbleiterschalter anliegende Sperrspannung) ermittelt werden. Erst nachdem durch die Messvorrichtung oder Steuereinheit festgestellt wurde, dass die über dem Schaltelement anliegende Spannung bezüglich des Abschaltvorgangs des Motors beständig unter der zulässigen maximalen Sperrspannung des Halbleiterschalters liegt, wird zunächst das Schaltelement geschlossen und daraufhin der Halbleiterschalter elektrisch leitend geschaltet, so dass der Elektromotor gestartet bzw. wiedereingeschaltet wird.

Der hinterlegte Referenzwert kann ebenso ein Zeitintervall sein, welcher nach einem Öffnen des Schaltelements, insbesondere wegen eines Abschaltens des Elektromotors, verstreichen muss, bis das Schaltelement erneut geschlossen werden kann. Die zeitliche Verzögerung des Einschaltvorgangs wird vorzugsweise durch die Steuereinheit gesteuert. Im ersten Schritt wird somit sichergestellt, dass das Schließen des Schaltelements nicht vor dem Ablauf des Zeitintervalls erfolgen kann. Das Zeitintervall ist vorzugsweise bei Elektromotoren bis 3kW mindestens 0,4 Sekunden, insbesondere ca. 0,5 Sekunden. Bei größeren Elektromotoren kann ein Zeitintervall von bis zu ca. 3 Sekunden notwendig sein.

Beim Wiedereinschalten eines laufenden Elektromotors bleibt das Schaltelement solange geöffnet, bis die induzierte Spannung des Elektromotors derart abgeklungen ist, dass die theoretisch am Halbleiterschalter anliegende Sperrspannung dauerhaft unterhalb der zulässigen maximalen Sperrspannung des Halbleiterschalters liegt. Erst danach wird das Schaltelement geschlossen und der Elektromotor mit dem Halbleiterschalter eingeschaltet. Dabei spielt es keine Rolle, ob der Motor in die entgegengesetzte Richtung (Reversieren) oder wieder in die gleiche Richtung eingeschaltet wird.

Der mit der Erfindung erzielte Vorteil besteht insbesondere darin, dass ein Halbleiterschalter mit einer niedrigen Sperrspannung im Motorstarter eingesetzt werden kann. Hierdurch können Kosten reduziert werden. Trotz Auslegung der maximalen Sperrspannung des Halbleiterschalters auf ca. die Hälfte der ansonsten erforderlichen Werte kann sichergestellt werden, dass es nach einem Abschaltvorgang des Elektromotors und eines darauffolgenden Befehls zum Wiedereinschalten des Elektromotors nicht zu einer Beschädigung des Halbleiterschalters kommt.

Der Halbleiterschalter ist vorzugsweise ein Thyristor, insbesondere ein Triac.

In einer vorteilhaften Ausführungsform der Erfindung ist die Steuereinheit derart ausgebildet, dass sie zum Unterbrechen einer über die erste Strombahn erfolgenden Energiezufuhr den Halbleiterschalter in den nichtleitenden Zustand schaltet und unmittelbar anschließend das geschlossene Schaltelement öffnet.

Der Halbleiterschalter des Motorstarters ist insbesondere derart ausgebildet, dass die zulässige maximale Sperrspannung des Halbleiterschalters bei einem Abschaltvorgang eines für den Motorstarter zulässigen maximalen hochgefahrenen Elektromotors (im Nennbetrieb) überschritten werden würde, sofern das in Serie liegende Schaltelement nicht zusätzliche während des Abschaltvorgangs automatisch durch die Steuereinheit geöffnet werden würde.

Beim Unterbrechen einer über die erste Strombahn erfolgenden Energiezufuhr ist die Zeitspanne vom Schalten des Halbleiterschalters in den nichtleitenden Zustand bis zum Öffnen des Schaltelements insbesondere derart bemessen, dass nach dem Schalten des Halbleiterschalters in den nichtleitenden Zustand die am Halbleiterschalter anliegende Sperrspannung nicht die zulässige maximale Sperrspannung des Halbleiterschalters überschreiten kann.

Das nach dem Schalten des Halbleiterschalters in den nichtleidenden Zustand unmittelbar anschließende Öffnen des geschlossenen Schaltelements erfolgt insbesondere bevor die theoretisch (d.h. sofern das Schaltelement nicht geöffnet werden würde) am Halbleiterschalter anliegende Sperrspannung die zulässige maximale Sperrspannung des Halbleiterschalters überschreiten würde.

Beim Unterbrechen einer über die erste Strombahn erfolgenden Energiezufuhr erfolgt nach dem Schalten des Halbleiterschalters in den nichtleitenden Zustand das Öffnen der Schaltelemente vorzugsweise innerhalb von 10 Millisekunden oder nach einer halben Perioden der Spannung des Versorgungsnetzes. Vorzugsweise wird nach dem Stromnulldurchgang der Versorgungsnetzspannung im Halbleiterschalter das Schaltelement geöffnet.

Das Öffnen des Schaltelements unmittelbar nach dem Schalten des Halbleiterschalters in den nichtleitenden Zustand erfolgt automatisch und selbstständig durch die Steuereinheit.

Die Steuereinheit ist vorzugsweise derart ausgebildet, dass sie zum Unterbrechen einer über die erste Strombahn erfolgenden Energiezufuhr den Halbleiterschalter in den nichtleitenden Zustand schaltet und anschließend das geschlossene Schaltelement öffnet, bevor die am Halbleiterschalter anliegende Sperrspannung die zulässige maximale Sperrspannung des Halbleiterschalters, vorzugsweise 90 Prozent der zulässigen maximalen Sperrspannung des Halbleiterschalters, überschreitet.

Bei dem Unterbrechen der über die erste Strombahn erfolgenden Energiezufuhr eines nachgeschalteten laufenden Elektromotors erfolgt das Öffnen des Schaltelements durch die Steuereinheit, während der Auslaufphase des Elektromotors; d.h. während des Zeitraums, in welchem durch den Elektromotor eine Spannung induziert wird.

Die maximale Sperrspannung des Halbleiterschalters kann somit auf ca. die Hälfte der ansonsten erforderlichen Werte reduziert werden. Dadurch, dass bei einem Abschaltvorgang des Elektromotors mittels des Motorstarters automatisch nach dem Schalten des Halbleiterschalters in den nichtleitenden Zustand das Schaltelement geöffnet wird, wird die innerhalb des Motorstarters anliegende Sperrspannung vom Halbleiterschalter zum Schaltelement "gelenkt". Es kann somit im Vergleich zu den bekannten Motorstartern für den Motorstarter ein Halbleiterschalter mit einer deutlich niedrigeren Sperrspannung eingesetzt werden. Hierdurch können die Kosten für den Motorstarter erheblich reduziert werden.

In einer weiteren vorteilhaften Ausführungsform der Erfindung umfasst der Motorstarter eine zweite Strombahn, über welche die Energiezufuhr des nachgeschalteten Elektromotors erfolgen kann, wobei die zweite Strombahn einen Halbleiterschalter und ein elektromechanisches Schaltelement umfasst, wobei der Halbleiterschalter und das Schaltelement der zweiten Strombahn in Serie geschaltet sind, wobei die Steuereinheit derart ausgebildet ist, dass sie zum Herstellen einer Energiezufuhr über die zweite Strombahn in einem ersten Schritt sicherstellt, dass die gegenwärtig über das Schaltelement der zweiten Strombahn anliegende Spannung bezüglich eines vorangegangenen Öffnens des Schaltelements der zweiten Strombahn, insbesondere bezüglich eines Abschaltvorgangs des nachgeschalteten Elektromotors, beständig unterhalb der zulässigen maximalen Sperrspannung des Halbleiterschalters der zweiten Strombahn liegt, und anschließend in einem zweiten Schritt zunächst das Schaltelement der zweiten Strombahn schließt und daraufhin den Halbleiterschalter der zweiten Strombahn leitend schaltet und/oder derart ausgebildet ist, dass sie zum Unterbrechen einer über die zweite Strombahn erfolgenden Energiezufuhr den Halbleiterschalter der zweiten Strombahn in den nichtleitenden Zustand schaltet und unmittelbar anschließend das geschlossene Schaltelement der zweiten Strombahn öffnet. Das unmittelbare anschließende Öffnen des Schaltelements der zweiten Strombahn erfolgt bevor die am Halbleiterschalter der zweiten Strombahn anliegende Sperrspannung die zulässige maximale Sperrspannung des Halbleiterschalters der zweiten Strombahn überschreitet.

Der Halbleiterschalter der zweiten Strombahn (insbesondere bezüglich dessen maximaler Sperrspannung) ist vorzugsweise analog zum Halbleiterschalter der ersten Strombahn ausgebildet. Ebenso erfolgt die Ansteuerung des Halbleiterschalters und des Schaltelements der zweiten Strombahn durch die Steuereinheit vorzugsweise analog zur Ansteuerung des Halbleiterschalters und des Schaltelement der ersten Strombahn durch die Steuereinheit.

In einer weiteren vorteilhaften Ausführungsform der Erfindung umfasst der Motorstarter eine dritte Strombahn, über welche die Energiezufuhr des nachgeschalteten Elektromotors erfolgen kann, wobei die dritte Strombahn einen Halbleiterschalter und ein elektromechanisches Schaltelement umfasst, wobei der Halbleiterschalter und das Schaltelement der dritten Strombahn in Serie geschaltet sind, wobei die Steuereinheit derart ausgebildet ist, dass sie zum Herstellen einer Energiezufuhr über die dritte Strombahn in einem ersten Schritt sicherstellt, dass die gegenwärtig über das Schaltelement der dritte Strombahn anliegende Spannung bezüglich eines vorangegangenen Öffnens des Schaltelements der dritte Strombahn, insbesondere bezüglich eines Abschaltvorgangs des nachgeschalteten Elektromotors, beständig unterhalb der zulässigen maximalen Sperrspannung des Halbleiterschalters der dritte Strombahn liegt, und anschließend in einem zweiten Schritt zunächst das Schaltelement der dritte Strombahn schließt und daraufhin den Halbleiterschalter der dritte Strombahn leitend schaltet, und/oder derart ausgebildet ist, dass sie zum Unterbrechen einer über die dritte Strombahn erfolgenden Energiezufuhr den Halbleiterschalter der dritten Strombahn in den nichtleitenden Zustand schaltet und unmittelbar anschließend das geschlossene Schaltelement der dritten Strombahn öffnet.

Das unmittelbare anschließende Öffnen des Schaltelements der dritten Strombahn erfolgt bevor die am Halbleiterschalter der dritten Strombahn anliegende Sperrspannung die zulässige maximale Sperrspannung des Halbleiterschalters der dritten Strombahn überschreitet.

Der Halbleiterschalter der dritten Strombahn (insbesondere bezüglich dessen maximale Sperrspannung) ist vorzugsweise analog zum Halbleiterschalter der ersten Strombahn ausgebildet. Ebenso erfolgt die Ansteuerung des Halbleiterschalters und des Schaltelements der dritten Strombahn durch die Steuereinheit vorzugsweise analog zur Ansteuerung des Halbleiterschalters und des Schaltelements der ersten Strombahn durch die Steuereinheit. Das Schaltelement der dritten Strombahn ist insbesondere zwischen dem eingangsseitigem Anschluss und dem Halbleiterschalter der dritten Strombahn angeordnet.

In einer weiteren vorteilhaften Ausführungsform der Erfindung ist die Steuereinheit derart ausgebildet, dass sie zum Herstellen einer Energiezufuhr über die Strombahn in einem ersten Schritt sicherstellt, dass die gegenwärtig über das Schaltelement anliegende Spannung bezüglich eines vorangegangenen Schaltens des Halbleiterschalters in den nichtleitenden Zustand und eines unmittelbar darauffolgenden Öffnens des Schaltelements beständig unterhalb der zulässigen maximalen Sperrspannung des Halbleiterschalters liegt, und anschließend in einem zweiten Schritt zunächst das Schaltelement schließt und daraufhin den Halbleiterschalter leitend schaltet.

Beim Herstellen einer über die erste Strombahn erfolgenden Energiezufuhr werden die eingangsseitigen Anschlussstelle n mit den ausgangsseitigen Anschlussstellen der ersten Strombahn elektrisch leitend verbunden, so dass über die erste Strombahn die Energiezufuhr für den nachgeschalteten Elektromotor erfolgt.

Nach einem Abschaltvorgang und einen unmittelbar darauffolgenden Einschaltvorgang, kann durch den laufenden Motor eine Spannung über den Motorstarter, insbesondere über das geöffnete Schaltelement anliegen, welche oberhalb der zulässigen maximalen Sperrspannung des Halbleiterschalters liegt.

In einem ersten Schritt wird daher durch die Steuereinheit vor einem Ansteuern des Schaltelements und des Halbleiterschalters sichergestellt, dass die aktuell vorliegende Spannung über dem geöffneten Schaltelement nicht über der zulässigen maximalen Sperrspannung des Halbleiters liegt. Die aktuell vorliegende Spannung über dem Schaltelement würde bei einem sofortigen Schließen des Schaltelements als Sperrspannung am Halbleiterschalter anliegen.

Die Steuereinheit kann daher nach einem Abschalten des Motors das Wiedereinschalten eines laufenden Motors verzögern, bis gemäß des ersten Schrittes sichergestellt ist, dass die gegenwärtig über das geöffnete Schaltelement anliegende Spannung bezüglich des vorangegangenen Schaltens des Halbleiterschalters in den nichtleitenden Zustand und des unmittelbar darauf folgenden Öffnens des Schaltelements beständig unterhalb der zulässigen maximalen Sperrspannung des Halbleiterschalters liegt.

Das Sicherstellen kann beispielsweise durch einen Abgleich mit einem in der Steuereinheit hinterlegten Referenzwert erfolgen. Der hinterlegte Referenzwert kann beispielsweise die zulässige maximale Sperrspannung des Halbleiterschalters sein. Mittels einer Messvorrichtung kann die über dem geöffneten Schaltelement anliegende Sperrspannung (die theoretisch am Halbleiterschalter anliegende Sperrspannung) ermittelt werden. Erst nachdem durch die Messvorrichtung oder Steuereinheit festgestellt wurde, dass die über dem Schaltelement anliegende Spannung bezüglich des Abschaltvorgangs des Motors beständig unter der zulässigen maximalen Sperrspannung des Halbleiterschalters liegt wird zunächst das Schaltelement geschlossen und daraufhin der Halbleiterschalter elektrisch leitend geschaltet, so dass der Elektromotor gestartet bzw. wiedereingeschaltet wird.

Der hinterlegte Referenzwert kann ebenso ein Zeitintervall sein, welcher nach einem Abschalten des Elektromotors, insbesondere nach einem diesbezüglichen Nichtleitendschaltens des Halbleiterschalters oder Öffnens des Schaltelements, verstreichen muss, bis das Schaltelement erneut geschlossen werden kann. Die zeitliche Verzögerung des Einschaltvorgangs wird vorzugsweise durch die Steuereinheit gesteuert. Im ersten Schritt wird somit sichergestellt, dass das Schließen des Schaltelements nicht vor dem Ablauf des Zeitintervalls erfolgen kann. Das Zeitintervall ist vorzugsweise bei Elektromotoren bis 3kW mindestens 0,4 Sekunden, insbesondere ca. 0,5 Sekunden. Bei größeren Elektromotoren kann ein Zeitintervall von bis zu ca. 3 Sekunden notwendig sein.

Beim Wiedereinschalten eines laufenden Elektromotors bleibt der Halbleiterschalter somit so lange im nichtleitenden Zustand, bis die induzierte Spannung des Elektromotors derart abgeklungen ist, dass die theoretisch am Halbleiterschalter anliegende Sperrspannung dauerhaft unterhalb der zulässigen maximalen Sperrspannung des Halbleiterschalters liegt. Erst danach wird das Schaltelement geschlossen und der Elektromotor mit dem Halbleiterschalter eingeschaltet. Dabei spielt es dann keine Rolle, ob der Motor in die entgegengesetzte Richtung (Reversieren) oder wieder in die gleiche Richtung eingeschaltet wird.

In einer weiteren vorteilhaften Ausführungsform der Erfindung umfasst die Strombahn ein parallel zum Halbleiterschalter geschaltetes Überbrückungsschaltelement. Der Halbleiterschalter der ersten, zweiten und/oder dritten Strombahn kann somit jeweils mittels eines Überbrückungsschaltelements überbrückt werden.

Nachdem der nachgeschaltete Elektromotor mittels des Halbleiterschalters eingeschaltet wurde kann der Halbleiterschalter mittels des Überbrückungsschaltelements überbrückt werden und anschließend in den nichtleitenden Zustand versetzt werden. Die Energieversorgung über die Strombahn erfolgt nun über das Überbrückungsschaltelement. Hierdurch kann die Verlustleistung sowie negative Temperaturentwicklung, welche bei einer Energieversorgung über den Halbleiterschalter vorliegt, reduziert werden.

Das erste, zweite und/oder dritte elektromechanische Schaltelement sowie das Überbrückungsschaltelement ist vorzugsweise ein Relais oder ein Schütz.

Die gegenwärtig über das Schaltelement anliegende Spannung ist insbesondere die Spannung, welche gegenwärtig über die eingangseitige und ausgangseitige Anschlussstelle der Strombahn des Schaltelements anliegt.

Die Spannung liegt beständig unterhalb der zulässigen maximalen Sperrspannung des Halbleiterschalters, wenn sichergestellt ist, dass bezüglich des Abschaltvorgangs des Elektromotors die Spannung am Schaltelement nicht die zulässige maximale Sperrspannung des Halbleiterschalters überschreitet.

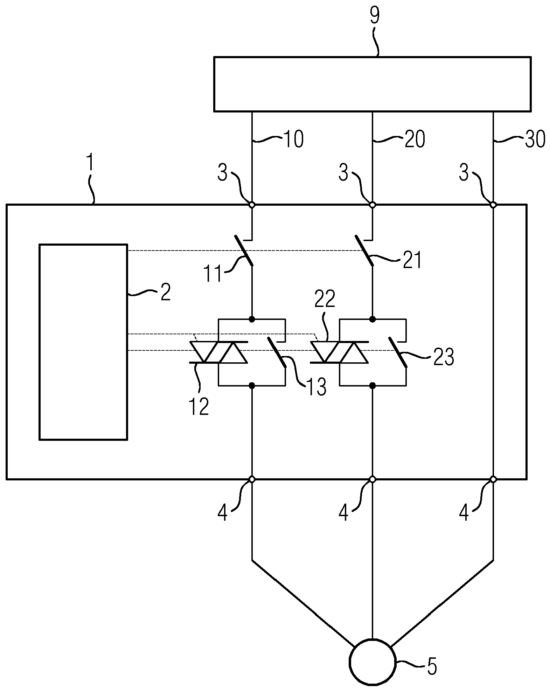

Im Folgenden werden die Erfindung und Ausgestaltungen der Erfindung anhand des in der Figur dargestellten Ausführungsbeispiels näher beschrieben und erläutert.

Die Figur zeigt eine schematische Darstellung eines Motorstarters 1, welcher mit seinen drei eingangsseitigen Anschlussstellen 3 mit einem Versorgungsnetz 9 und mit seinen drei ausgangsseitigen Anschlussstellen 4 mit einem Elektromotor 5 verbunden ist. Der Verbraucher 5 ist ein Asynchronmotor. Das Versorgungsnetz 9 ist ein Dreiphasenwechselstromnetz einer industriellen Niederspannungsschaltanlage.

Eine erste Phase 10 des Versorgungsnetzes 9 ist mittels einer Leitung mit der eingangsseitigen Anschlussstelle 3 verbunden und wird über eine erste Strombahn des Motorstarters 1 geräteintern zur ausgangsseitigen Anschlussstelle 4 geführt und anschließend mittels einer weiteren Leitung zum Elektromotor 5 geführt. Die erste Strombahn des Motorstarters 1 verbindet geräteintern die eingangsseitige Anschlussstelle 3 des Motorstarters 1 mit der ausgangsseitigen Anschlussstelle 4 des Motorstarters 1. Die erste Strombahn umfasst ein elektromechanisches Schaltelement 11, einen Halbleiterschalter 12, insbesondere ein Triac, und ein Überbrückungsschaltelement 13. Das elektromechanische Schaltelement 11 ist in Serie zu der Parallelschaltung des Halbleiterschalters 12 mit dem Überbrückungsschaltelement 13 geschaltet. Über die erste Strombahn wird folglich die erste Phase 10 des Versorgungsnetzes 9 zum Elektromotor 5 geführt.

Eine zweite Phase 20 des Versorgungsnetzes 9 ist mittels einer Leitung mit der eingangsseitigen Anschlussstelle 3 verbunden und wird über eine zweite Strombahn des Motorstarters 1 geräteintern zur ausgangsseitigen Anschlussstelle 4 geführt und anschließend mittels einer weiteren Leitung zum Elektromotor 5 geführt. Die zweite Strombahn des Motorstarters 1 verbindet geräteintern die eingangsseitige Anschlussstelle 3 des Motorstarters 1 mit der ausgangsseitigen Anschlussstelle 4 des Motorstarters 1. Die zweite Strombahn umfasst ein elektromechanisches Schaltelement 21, ein Halbleiterschalter 22, insbesondere ein Triac, und ein Überbrückungsschaltelement 23. Das elektromechanische Schaltelement 21 ist in Serie zu der Parallelschaltung des Halbleiterschalters 22 mit dem Überbrückungsschaltelement 23 geschaltet. Über die zweite Strombahn wird folglich die zweite Phase 20 des Versorgungsnetzes 9 zum Elektromotor 5 geführt.

Eine dritte Phase 30 des Versorgungsnetzes 9 ist mittels einer Leitung mit der eingangsseitigen Anschlussstelle 3 verbunden und wird über eine dritte Strombahn des Motorstarters 1 geräteintern zur ausgangsseitigen Anschlussstelle 4 geführt und anschließend mittels einer weiteren Leitung zum Elektromotor 5 geführt. Die dritte Strombahn des Motorstarters 1 verbindet geräteintern die eingangsseitige Anschlussstelle 3 des Motorstarters 1 mit der ausgangsseitigen Anschlussstelle 4 des Motorstarters 1. Der abgebildete Motorstarter 1 ist ein 2-phasig gesteuerter Motorstarter 1, so dass die dritte Strombahn eine geräteinterne feste durchgehende elektrische Kontaktierung zwischen der eingangsseitigen und ausgangsseitigen Anschlussstelle 3,4 bildet. Es ist jedoch ebenso denkbar, dass die dritte Strombahn analog zur ersten und/oder zweiten Strombahn des Motorstarters 1 ausgebildet ist.

Der Motorstarter 1 umfasst eine Steuereinheit 2 mittels welcher die Ansteuerung der Schaltelemente 11,21 der Halbleiterschalter 12,22 und des Überbrückungsschaltelements 13,23 erfolgt. Die Steuereinheit 2 kann ferner Steuersignale (Einschalten/Ausschalten des Elektromotors 5) für den Motorstarter 1 empfangen und hierauf die entsprechenden Schaltbefehle an die Halbleiterschalter 12,22, Schaltelemente 11,21 und die Überbrückungsschaltelemente 13,23 ausgeben.

Die Halbleiterschalter 12,22 des Motorstarters 1 sind derart ausgebildet, dass die zulässige maximale Sperrspannung der Halbleiterschalter 12,22 oberhalb des Scheitelwertes der nominalen Spannung des Versorgungsnetzes ($U_{Netz}$) und unterhalb des Wertes aus

$$U_{Netz} \cdot \sqrt{2} \cdot 2$$ liegt. Die maximale Sperrspannung des Halbleiterschalters liegt insbesondere bei ca.

$$U_{Netz} \cdot \sqrt{2} \cdot 1{,}1 \ .$$

Liegt ein laufender Elektromotor 5 im Nennbetrieb vor, so sind innerhalb des Motorstarters 1 die Schaltelemente 11,21 geschlossen, die Halbleiterschalter 12,22 elektrisch nicht leitend geschaltet und die Überbrückungsschaltelemente 13,23 geschlossen. Empfängt der Motorstarter 1 nun ein Signal zum Abschalten des Elektromotors 5, so unterbricht der Motorstarter 1 die über die erste und zweite Strombahn erfolgende Energiezufuhr für den Elektromotor 5. Hierfür werden zunächst die Halbleiterschalter 12,22 durch die Steuereinheit 2 elektrisch leitend geschaltet und anschließend das Überbrückungsschaltelement 13,23 durch die Steuereinheit 2 geöffnet. Anschließend werden die Halbleiterschalter 12,22 durch die Steuereinheit 2 in den nichtleitenden Zustand geschaltet, so dass die Energieversorgung über die erste und zweite Strombahn zum Elektromotor 5 unterbrochen wird. Unmittelbar anschließend an das Nichtleitendschalten des Halbleiterschalters 12,22 wird automatisch durch die Steuereinheit 2 das Schaltelement 11,21 geöffnet. Hierdurch wird der Potentialunterschied zwischen der Spannung des Versorgungsnetzes 9 und der induzierten Spannung des Elektromotors 5 von den Halbleiterschaltern 12,22 zu den geöffneten Schaltelementen 11,21 verlagert. Die Halbleiterschalter 12,22 des Motorstarters 5 können daher derart ausgebildet sein, dass die zulässige maximale Sperrspannung der Halbleiterschalter 12,22 unterhalb des Wertes aus

$$U_{Netz} \cdot \sqrt{2} \cdot 2$$ liegt. Das Öffnen der Schaltelemente 11,21 nach dem Nichtleitendschalten der Halbleiterschalter 12,22 erfolgt insbesondere innerhalb von 0,5 Perioden der Spannung des Versorgungsnetzes nach dem Schalten des Halbleiterschalters 12,22 in den nichtleitenden Zustand. Es ist ebenso denkbar, dass das Öffnen der Schaltelemente 11,21 nach dem Nichtleitendschalten der Halbleiterschalter 12,22 innerhalb einer fest vorgegebenen Zeit erfolgt, so dass sichergestellt wird, dass die aktuell an den Halbleiterschaltern 12,22 anliegende Sperrspannung die zulässige maximale Sperrspannung der Halbleiterschalter 12,22 nicht überschreitet. Das nach dem Schalten der Halbleiterschalter 12,22 in den nichtleidenden Zustand unmittelbar anschließende Öffnen der geschlossenen Schaltelement 11,21 erfolgt insbesondere bevor die theoretisch am jeweiligen Halbleiterschalter 12,22 anliegende Sperrspannung die zulässige maximale Sperrspannung des Halbleiterschalters 12,22 überschreiten würde. Die notwendige Steuerung der Schaltvorgänge erfolgt mittels der Steuereinheit 2.

Empfängt der Motorstarter 1 unmittelbar nach dem Abschalten des laufenden Elektromotors 5 ein Signal zum Einschalten des Elektromotors 5, so stellt der Motorstarter 1 über die erste und zweite Strombahn eine Energiezufuhr für den nachgeschalteten Elektromotor 5 her. In diesem Fall liegt zunächst ein noch laufender durch den Motorstarter 1 abgeschalteter Elektromotor 5 vor. Hierbei sind innerhalb des Motorstarters 1 die Schaltelemente 11,21 geöffnet, die Halbleiterschalter 12,22 elektrisch nicht leitend geschaltet und die Überbrückungsschaltelemente 13,23 geöffnet. Bei dem Einschalten des Elektromotors 5 (herstellen der Energiezufuhr über die Strombahnen) stellt die Steuereinheit 2 in einem ersten Schritt sicher, dass die gegenwärtig über das geöffnete Schaltelement 12 anliegende Spannung beständig unterhalb der zulässigen maximalen Sperrspannung der Halbleiterschalter 12,22 liegt. Erst danach schließt die Steuereinheit 2 in einem zweiten Schritt zunächst die Schaltelemente 11,21 und schaltet daraufhin die Halbleiterschalter 12,22 in den leitenden Zustand.

Im ersten Schritt wird vor dem Schließen der Schaltelemente 11,12 sichergestellt, dass die aktuell über den Schaltelementen 11,21 anliegende Spannung bezüglich eines vorangegangenen Abschaltens des Elektromotors (die Halbleiterschalter 12,22 wurden in den nichtleitenden Zustand geschaltet und unmittelbar anschließend die Schaltelemente 11,21 geöffnet) dauerhaft (d.h. bezüglich des Abschaltvorgangs des Elektromotors) unterhalb der zulässigen maximalen Sperrspannung der Halbleiterschalter 12,22 liegt. Dies erfolgt in diesem Ausführungsbeispiel dadurch, dass nach einem Öffnen der Schaltelemente 11,21 eine in der Steuereinheit 2 hinterlegte Zeitdauer verstreichen muss.

Durch die zu verstreichende Zeitdauer wird sichergestellt, dass an den Halbleiterschaltern 12,22 nicht eine Sperrspannung anliegen kann, welche deren zulässigen maximalen Sperrspannung überschreiten würde.

Erst nach dieser Zeitdauer wird der Elektromotor 5 aktiv über das Schließen der Schaltelemente 11,21 und des darauffolgenden Schaltens der Halbleiterschalter 12,22 in den elektrisch leitenden Zustand eingeschaltet.

Durch das in Reihe zum Halbleiterschalter 12,22 liegende Schaltelement 11,21 wird der jeweilige Halbleiterschalter 12,22 somit so lange freigeschaltet, bis die induzierte Spannung im Elektromotor 5 unterhalb den für die Halbleiterschalter 12,22 zulässigen Wert der Sperrspannung abgeklungen ist.

Wenn der Elektromotor 5 wieder eingeschaltet werden soll, werden die Schaltelemente 11,21 erst nach Ablauf der erforderlichen "Freischaltzeit" geschlossen. Somit übernimmt erst zu diesem Zeitpunkt der jeweilige Halbleiterschalter 12,22 die Sperrspannung, die sich aus der Netzspannung und der induzierten Spannung des Elektromotors 5 ergibt. Die Halbleiterschalter 12,22 werden folglich so lange durch die Schaltelemente 11,21 von der Spannungsbeanspruchung frei geschaltet, bis die zeitlich begrenzte Phase, in der eine Überbeanspruchung für die Halbleiterschalter 12,22 bestehen würde, abgelaufen ist.

Der Vorteil besteht darin, dass die Auslegung der Spannungsfestigkeit für die Halbleiterschalter 12,22 auf ca. die Hälfte der ansonsten erforderlichen Werte reduziert werden kann. Dies bedeutet für das in der Beschreibungseinleitung genannte Beispiel, dass anstatt einer erforderlichen maximalen Sperrspannung von 1600 V für den jeweiligen Halbleiterschalter 12,22 eine maximale Sperrspannung von 800 V für den jeweiligen Halbleiterschalter 12,22 ausreicht. Hierdurch werden Kosten eingespart. Insbesondere bei kleinen Motorleistungen um 3kW ist es somit möglich, einfache, kostengünstige Thyristoren und Triacs zu verwenden.

Mit den Schaltelementen 11,21 können die Halbleiterschalter 12,22 im nichtleitenden Zustand in dieser Darstellung auf der Netzseite des Motorstarter 1 freigeschaltet werden. Die Schaltelemente 11,21 könnten jedoch ebenso auf der Lastseite des Motorstarter 1 angeordnet werden.

**Patentansprüche**

1. Motorstarter (1) mit einer Steuereinheit (2) und einer ersten Strombahn, über welche eine Energiezufuhr für einen nachgeschalteten Elektromotor (5) erfolgen kann, wobei die erste Strombahn einen Halbleiterschalter (12) und ein elektromechanisches Schaltelement (11) umfasst, wobei der Halbleiterschalter (12) und das Schaltelement (11) in Serie geschaltet sind,
**dadurch gekennzeichnet, dass**
die Steuereinheit (2) derart ausgebildet ist, dass sie zum Herstellen einer Energiezufuhr über die erste Strombahn in einem ersten Schritt sicherstellt, dass die gegenwärtig über das Schaltelement (11) anliegende Spannung bezüglich eines vorangegangenen Öffnens des Schaltelements (11) unterhalb der zulässigen maximalen Sperrspannung des Halbleiterschalters (12) liegt, und anschließend in einem zweiten Schritt zunächst das Schaltelement (11) schließt und daraufhin den Halbleiterschalter (12) leitend schaltet.

2. Motorstarter (1) nach Anspruch 1, wobei die Steuereinheit (2) derart ausgebildet ist, dass sie zum Unterbrechen einer über die erste Strombahn erfolgenden Energiezufuhr den Halbleiterschalter (12) in den nichtleitenden Zustand schaltet und unmittelbar anschließend das geschlossene Schaltelement (11) öffnet.

3. Motorstarter (1) nach einem der vorhergehenden Ansprüche, wobei der Motorstarter (1) eine zweite Strombahn, über welche die Energiezufuhr des nachgeschalteten Elektromotors (5) erfolgen kann, umfasst, wobei die zweite Strombahn einen Halbleiterschalter (22) und ein elektromechanisches Schaltelement (21) umfasst, wobei der Halbleiterschalter (22) und das Schaltelement (21) der zweiten Strombahn in Serie geschaltet sind, wobei die Steuereinheit (2) derart ausgebildet ist, dass sie zum Herstellen einer Energiezufuhr über die zweite Strombahn in einem ersten Schritt sicherstellt, dass die gegenwärtig über das Schaltelement (21) der zweiten Strombahn anliegende Spannung bezüglich eines vorangegangenen Öffnens des Schaltelements (21) der zweiten Strombahn unterhalb der zulässigen maximalen Sperrspannung des Halbleiterschalters (22) der zweiten Strombahn liegt, und anschließend in einem zweiten Schritt zunächst das Schaltelement (21) der zweiten Strombahn schließt und daraufhin den Halbleiterschalter (22) der zweiten Strombahn leitend schaltet.

4. Motorstarter (1) nach Anspruch 3, wobei die Steuereinheit (2) derart ausgebildet ist, dass sie zum Unterbrechen einer über die zweite Strombahn erfolgenden Energiezufuhr den Halbleiterschalter (22) der zweiten Strombahn in den nichtleitenden Zustand schaltet und unmittelbar anschließend das geschlossene Schaltelement (21) der zweiten Strombahn öffnet.

5. Motorstarter (1) nach einem der vorhergehenden Ansprüche, wobei der Motorstarter (1) eine dritte Strombahn, über welche die Energiezufuhr des nachgeschalteten Elektromotors (5) erfolgen kann, umfasst, wobei die dritte Strombahn einen Halbleiterschalter und ein elektromechanisches Schaltelement umfasst, wobei der Halbleiterschalter und das Schaltelement der dritte Strombahn in Serie geschaltet sind, wobei die Steuereinheit (2) derart ausgebildet ist, dass sie zum Herstellen einer Energiezufuhr über die dritte Strombahn in einem ersten Schritt sicherstellt, dass die gegenwärtig über das Schaltelement der dritte Strombahn anliegende Spannung bezüglich eines vorangegangenen Öffnens des Schaltelements der dritte Strombahn unterhalb der zulässigen maximalen Sperrspannung des Halbleiterschalters der dritte Strombahn liegt, und anschließend in einem zweiten Schritt zunächst das Schaltelement der dritte Strombahn schließt und daraufhin den Halbleiterschalter der dritte Strombahn leitend schaltet.

6. Motorstarter (1) nach einem der vorhergehenden Ansprüche, wobei die Steuereinheit (2) derart ausgebildet ist, dass sie zum Unterbrechen einer über die dritte Strombahn erfolgenden Energiezufuhr den Halbleiterschalter der dritten Strombahn in den nichtleitenden Zustand schaltet und unmittelbar anschließend das geschlossene Schaltelement der dritten Strombahn öffnet.

7. Motorstarter (1) nach einem der vorhergehenden Ansprüche, wobei die zulässige maximale Sperrspannung des Halbleiterschalters oberhalb des Scheitelwerts der für den Motorstarter zulässigen nominalen Spannung des Versorgungsnetzes ($U_{Netz}$) und unterhalb des Wertes aus $U_{Netz} \cdot \sqrt{2} \cdot 2$ liegt.

8. Motorstarter (1) nach einem der vorhergehenden Ansprüche, wobei die Strombahn ein parallel zum Halbleiterschalter (12,22) geschaltetes Überbrückungsschaltelement (13,23) umfasst.

9. Verfahren zum Herstellen einer Energiezufuhr über eine erste Strombahn eines Motorstarters (1) für einen nachgeschalteten Elektromotor (5), wobei die erste Strombahn einen Halbleiterschalter (12) und ein elektromechanisches Schaltelement (11) umfasst, wobei der Halbleiterschalter (12) und das Schaltelement (11) in Serie geschaltet sind,

**dadurch gekennzeichnet, dass**
zum Herstellen der Energiezufuhr über die erste Strombahn die Steuereinheit (2) in einem ersten Schritt sicherstellt, dass die gegenwärtig über das Schaltelement (12) anliegende Spannung bezüglich eines vorangegangenen Öffnens des Schaltelements (11) unterhalb der zulässigen maximalen Sperrspannung des Halbleiterschalters (12) liegt, und anschließend in einem zweiten Schritt zunächst das Schaltelement (11) schließt und daraufhin den Halbleiterschalter (12) leitend schaltet.

## Claims

1. Motor starter (1) having a control unit (2) and a first current path via which energy can be supplied to a downstream electric motor (5), wherein the first current path comprises a semiconductor switch (12) and an electromechanical switch element (11), wherein the semiconductor switch (12) and the switch element (11) are connected in series,
**characterised in that**
the control unit (2) is designed such that, in order to establish an energy supply via the first current path it ensures in a first step that the voltage currently applied via the switch element (11) in respect of a previous opening of the switch element (11) is below the maximum allowable blocking voltage of the semiconductor switch (12) and, subsequently in a second step, first closes the switch element (11) and then switches the semiconductor switch (12) to be conductive.

2. Motor starter (1) according to claim 1, wherein the control unit (2) is designed such that, to interrupt the energy supply via the first current path, it switches the semiconductor switch (12) into the non-conductive state and immediately afterward opens the closed switch element (11).

3. Motor starter (1) according to one of the preceding claims, wherein the motor starter (1) comprises a second current path, via which energy can be supplied to the downstream electric motor (5), wherein the second current path comprises a semiconductor switch (22) and an electromechanical switch element (21), wherein the semiconductor switch (22) and the switch element (21) of the second current path are connected in series, wherein the control unit (2) is designed such that, in order to establish an energy supply via the second current path, it ensures in a first step that the voltage currently applied via the switch element (21) of the second current path in respect of a previous opening of the switch element (21) of the second current path is below the maximum allowable blocking voltage of the semiconductor switch (22) of the second current path and, subsequently in a second step, first closes the switch element (21) of the second current path and then switches the semiconductor switch (22) of the second current path to be conductive.

4. Motor starter (1) according to claim 3, wherein the control unit (2) is designed such that, to interrupt energy supplied via the second current path, it switches the semiconductor switch (22) of the second current path to the non-conductive state and immediately afterward opens the closed switch element (21) of the second current path.

5. Motor starter (1) according to one of the preceding claims, wherein the motor starter (1) comprises a third current path, via which the downstream electric motor (5) can be supplied with energy, wherein the third current path comprises a semiconductor switch and an electromechanical switch element, wherein the semiconductor switch and the switch element of the third current path are connected in series, wherein the control unit (2) is designed such that, to establish an energy supply via the third current path, it ensures in a first step that the voltage currently applied via the switch element of the third current path in respect of a previous opening of the switch element of the third current path is below the maximum allowable blocking voltage of the semiconductor switch of the third current path and then, in a second step, closes the switch element of the third current path and then switches the semiconductor switch of the third current path to be conductive.

6. Motor starter (1) according to one of the preceding claims, wherein the control unit (2) is designed such that, to interrupt energy supplied a via the third current path, it switches the semiconductor switch of the third current path to the non-conductive state and immediately afterward opens the closed switch element of the third current path.

7. Motor starter (1) according to one of the preceding claims, wherein the maximum allowable blocking voltage of the semiconductor switch is above the peak value of the allowable nominal voltage of the supply network ($U_{Netz}$) for the motor starter and below the value from $U_{Netz} \cdot \sqrt{2} \cdot 2$.

8. Motor starter (1) according to one of the preceding claims, wherein the current path comprises a bridging switch element (13, 23) switched in parallel to the semiconductor switch (12, 22).

9. Method to establish an energy supply via a first current path of a motor starter (1) for a downstream electric motor (5), wherein the first current path comprises a semiconductor switch (12) and an electromechanical switch element (11), wherein the semiconductor switch (12) and the switch element (11) are connected in series,
**characterised in that**
to establish the energy supply via the first current path, the control unit (2) ensures in a first step that the voltage currently applied via the switch element (12) in respect of a previous opening of the switch element (11) is below the maximum allowable blocking voltage of the semiconductor switch (12) and, subsequently in a second step, first closes the switch element (11) and then switches the semiconductor switch (12) to be conductive.

**Revendications**

1. Démarreur (1) comprenant une unité (2) de commande et une première voie de courant, par laquelle un apport d'énergie pour un moteur (5) électrique monté en aval peut s'effectuer, la première voie de courant comprenant un interrupteur (12) à semi-conducteur et un élément (11) de commutation électromécanique, l'interrupteur (12) à semi-conducteur et l'élément (11) de commutation étant montés en série,
**caractérisé en ce que**
l'unité (2) de commande est constituée de manière à assurer, dans un premier stade, pour la production d'un apport d'énergie par la première voie de courant, que la tension appliquée présentement par l'intermédiaire de l'élément (11) de commutation, par rapport à une ouverture précédente de l'élément (11) de commutation, est inférieure à la tension de blocage maximum admissible de l'interrupteur (12) à semi-conducteur, et ensuite, dans un deuxième stade, à fermer d'abord l'élément (11) de commutation et à rendre ensuite passant l'interrupteur (12) à semi-conducteur.

2. Démarreur (1) suivant la revendication 1, dans lequel l'unité (2) de commande est constituée de manière à mettre, pour interrompre un apport d'énergie s'effectuant par la première voie de courant, l'interrupteur (12) à semi-conducteur à l'état non passant et immédiatement ensuite à ouvrir l'élément (11) de commutation fermé.

3. Démarreur (1) suivant l'une des revendications précédentes, dans lequel le démarreur (1) a une deuxième voie de courant, par laquelle l'apport d'énergie au moteur (5) électrique monté en aval peut s'effectuer, la deuxième voie de courant comprenant un interrupteur (22) à semi-conducteur et un élément (21) de commutation électromécanique, l'interrupteur (22) à semi-conducteur et l'élément (21) de commutation de la deuxième voie de courant étant montés en série, l'unité (2) de commande étant constituée de manière à assurer dans un premier stade, pour la production d'un apport d'énergie par l'intermédiaire de la deuxième voie de courant, que la tension appliquée présentement par l'élément (21) de commutation de la deuxième voie de courant, par rapport à une ouverture précédente de l'élément (21) de commutation de la deuxième voie de courant, est inférieure à la tension de blocage maximum admissible de l'interrupteur (22) à semi-conducteur de la deuxième voie de courant, et à fermer ensuite, dans un deuxième stade, d'abord l'élément (21) de commutation de la deuxième voie de courant et ensuite à rendre passant l'interrupteur (22) à semi-conducteur de la deuxième voie de courant.

4. Démarreur (1) suivant la revendication 3, dans lequel l'unité (2) de commande est constituée de manière à mettre, pour interrompre un apport d'énergie s'effectuant par la deuxième voie de courant, l'interrupteur (22) à semi-conducteur de la deuxième voie de courant dans l'état non passant et immédiatement ensuite à ouvrir l'élément (21) de commutation fermé de la deuxième voie de courant.

5. Démarreur (1) suivant l'une des revendications précédentes, dans lequel le démarreur (1) a une troisième voie de courant, par laquelle l'apport d'énergie au moteur (5) électrique monté en aval peut s'effectuer, la troisième voie de courant comprenant un interrupteur à semi-conducteur et un élément de commutation électromécanique, l'interrupteur à semi-conducteur et l'élément de commutation de la troisième voie de courant étant montés en série, l'unité (2) de commande étant constituée de manière à assurer dans un premier stade, pour la production d'un apport d'énergie par la troisième voie de courant, que la tension s'appliquant présentement par l'élément de commutation de la troisième voie de courant, par rapport à une ouverture précédente de l'élément de commutation de la troisième voie de courant, est inférieure à la tension de blocage maximum admissible de l'interrupteur à semi-conducteur de la troisième voie de courant, et ensuite à fermer, dans un deuxième stade, d'abord l'élément de commutation de la troisième voie de courant et ensuite à mettre l'interrupteur à semi-conducteur de la troisième voie de courant à l'état passant.

6. Démarreur (1) suivant l'une des revendications précédentes, dans lequel l'unité (2) de commande est constituée de manière à mettre, pour interrompre un apport d'énergie s'effectuant par la troisième voie de courant, l'interrupteur à semi-conducteur de la troisième voie de courant à l'état non passant et immédiatement ensuite à ouvrir l'élément de commutation fermé de la troisième voie de courant.

7. Démarreur (1) suivant l'une des revendications précédentes, dans lequel la tension de blocage maximum admissible de l'interrupteur à semi-conducteur est supérieure à la valeur de crête de la tension nominale admissible pour le démarreur du réseau $(U_{Netz})$ d'alimentation et en dessous de la valeur

$$U_{Netz} \cdot \sqrt{2.2}.$$

8. Démarreur (1) suivant l'une des revendications précédentes, dans lequel la voie de courant comprend un élément (13, 23) de commutation de dérivation monté en parallèle à l'interrupteur (12, 22) à semi-conducteur.

9. Procédé de production d'un apport d'énergie par une première voie de courant d'un démarreur (1) pour un moteur (5) électrique monté en aval, la première voie de courant comprenant un interrupteur (12) à semi-conducteur et un élément (11) de commutation électromécanique, l'interrupteur (12) à semi-conducteur et l'élément (11) de commutation étant montés en série,
**caractérisé en ce que,**
pour la production de l'apport d'énergie par la première voie de courant, l'unité (2) de commande assure, dans un premier stade, pour la production d'un apport d'énergie par la première voie de courant, que la tension appliquée présentement par l'intermédiaire de l'élément (11) de commutation, par rapport à une ouverture précédente de l'élément (11) de commutation, est inférieure à la tension de blocage maximum admissible de l'interrupteur (12) à semi-conducteur, et ensuite, dans un deuxième stade, ferme d'abord l'élément (11) de commutation et rend ensuite passant l'interrupteur (12) à semi-conducteur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0806781 A1
- DE 1415980 A1